# EUROPÄISCHE PATENTSCHRIFT

(11) **EP 1 666 580 B1**
(45) Veröffentlichungstag und Bekanntmachung des Hinweises auf die Patenterteilung: **24.02.2010**
(21) Anmeldenummer: 05021137.4
(22) Anmeldetag: 28.09.2005
(51) Int. Cl.: C12C 13/02, C12C 7/20

(54) **Verfahren zum Betrieb einer Würzekocheinrichtung und Würzekocheinrichtung**
Method for operating a wort boiling device and wort boiling device
Procédé d'opération d'un appareil pour l'ébullition de moût et appareil pour l'ébullition de moût

(30) Priorität: 06.12.2004 DE 102004058839
(43) Veröffentlichungstag der Anmeldung: 07.06.2006
(73) Patentinhaber: GEA BREWERY SYSTEMS GMBH, 97318 Kitzingen (DE)
(72) Erfinder: Lenz, August, 97318 Kitzingen (DE); Schmidt, Thorsten, 67549 Worms (DE)
(74) Vertreter: von den Steinen, Axel

(56) Entgegenhaltungen:
- EP-A- 1 469 062
- DE-A1- 10 134 664
- DE-A1- 19 634 010
- DE-C1- 3 442 516
- DE-C1- 3 504 500

## Beschreibung

Die Erfindung betrifft ein Verfahren zum Betrieb einer Würzekocheinrichtung und eine zur Durchführung dieses Verfahrens geeignete Würzekocheinrichtung nach dem Oberbegriff der beiden unabhängigen Hauptansprüche.

Ein gattungsgemäßes Würzekochverfahren ist beispielsweise aus der DE 34 42 516 C1 bekannt. Bei diesem Würzekochverfahren kommt eine Würzepfanne mit Röhreninnenkocher zum Einsatz, wobei die Würze durch eine Einströmöffnung in den Röhreninnenkocher einströmt und durch eine Ausströmöffnung aus dem Röhreninnenkocher ausströmt. In dem Gehäuse des Röhreninnenkochers ist eine Heizeinrichtung, beispielsweise ein dampfdurchströmter Röhrbündelwärmetauscher, vorgesehen, mit dem die Würze im Innenkocher aufgeheizt wird. Außerdem weist das Gehäuse des Innenkochers unterhalb des Staukonus Bypassöffnungen auf, durch die die Würze aus dem Gehäuse unter Umgehung der Ausströmöffnung ausströmen kann.

Bei dem in der DE 34 42 516 C1 beschriebenen Kochverfahren wird die Würzepfanne zunächst nur mit soviel Würze befüllt, dass sich ein entsprechend niedriger Flüssigkeitsstand in der Würzepfanne ergibt, so dass die Bypassöffnungen im Gehäuse des Innenkochers oberhalb des von der Würze gebildeten Flüssigkeitsspiegels liegen. In der ersten Phase des Kochprozesses, nämlich der Aufheizphase, werden die Bypassöffnungen des Innenkochers geöffnet, so dass die Würze während der Aufheizphase aus den Bypassöffnungen austreten kann. Die aus den Bypassöffnungen ausströmende Würze fällt unter dem Schwerkrafteinfluss nach unten und trifft auf den Flüssigkeitsspiegel des in der Würzekocheinrichtung befindlichen Würzevolumens. Sobald die Würze ihre Kochtemperatur erreicht hat, wird die Würzepfanne mit einem zusätzlichen Würzevolumen befüllt und die Bypassöffnungen geschlossen. Im Ergebnis strömt nun das gesamte aufgeheizte Würzevolumen aus dem Innenkocher zur Ausströmöffnung. Dort wird die Würze an einem Pralldach seitlich nach außen abgelenkt und fällt wiederum aufgrund der Schwerkraft auf den nun höher liegenden Flüssigkeitsspiegel der Würze.

Die EP 1 469 062 A1 und die DE 101 34 664 A1 beschreiben jeweils Würzepfannen mit Innenkocher, bei denen am Innenkocher unterhalb des Staukonus Bypassöffnungen vorgesehen sind, durch die Würze austreten kann.

Ausgehend von diesem Stand der Technik ist es Aufgabe der vorliegenden Erfindung, ein neues Verfahren zur Würzekochung vorzuschlagen. Weiter ist es Aufgabe der vorliegenden Erfindung, eine zur Durchführung dieses Verfahrens geeignete Würzekocheinrichtung anzugeben.

Untersuchungen der Würzeströmung in bekannten Würzekocheinrichtungen haben gezeigt, dass sich im Würzevolumen Bereiche bilden, entlang denen die Würze sehr stark strömt, wohingegen die Würze in anderen Bereichen des Würzevolumens nur sehr schwach oder überhaupt nicht strömt. Die in diesen Strömungstoträumen befindliche Würze wird somit nur sehr schwach während des Würzekochprozesses erhitzt, so dass die durch die Würzekochung verursachten Stoffumsetzungsprozesse in diesen Bereichen nur sehr schwer oder überhaupt nicht ablaufen.

Ein Ziel des erfindungsgemäßen Verfahrens ist es deshalb, für eine bessere Durchmischung der Würze im Würzevolumen außerhalb des Innenkochers zu sorgen. Dieses Ziel wird dadurch erreicht, dass die Würzekocheinrichtung mit einem Würzevolumen gefüllt wird, so dass die geöffneten Bypassöffnungen unterhalb des von der Würze gebildeten Flüssigkeitsspiegels liegen. Damit kann die Würze unter Umgehung der Ausströmöffnung durch die Bypassöffnung ausströmen und gelangt direkt in das das Gehäuse umgebende Würzevolumen, ohne auf den Flüssigkeitsspiegel aufzutreffen. Durch diesen zusätzlichen Strömungspfad in das Würzevolumen wird die Bildung von Strömungstoträumen verringert bzw. gänzlich vermieden. Außerdem werden einige der Stoffumsetzungsprozesse durch die Vermeidung des Auftreffens der Würze auf den Flüssigkeitsspiegel begünstigt, so dass im Ergebnis die Würzequalität verbessert werden kann. Durch die Bypassöffnungen können die im Innenkocher auftretenden Druckverluste variabel eingestellt werden und somit an die Kochparameter angepasst werden. Erfindungsgemäß wird die durch die Bypassöffnung überströmende Würzeströmung dadurch beeinflusst, dass der Öffnungsquerschnitt der Bypassöffnung während des Würzekochprozesses verändert wird.

Grundsätzlich ist es denkbar, dass die Bypassöffnungen rein stationär betrieben werden, so dass die aus den Bypassöffnungen überströmende Würzeströmung nicht gezielt beeinflusst werden kann. Nach einer bevorzugten Ausführungsform wird die durch die Bypassöffnungen überströmende Würzeströmung in Abhängigkeit vom Würzekochprozess, beispielsweise in Abhängigkeit der Würzekochzeit, verändert. Dadurch kann erreicht werden, dass die positiven Wirkungen, die durch das Überströmen der Würze durch die Bypassöffnungen unter Umgehung der oberen Ausströmöffnung optimal auf die Randbedingungen während des Würzekochprozesses angepasst werden.

Von besonderer Bedeutung ist die Einstellung der Bypassöffnung während der Aufheizphase, d.h. in der Phase des Würzekochprozesses, in der die Würze von einer Anfangstemperatur auf eine bestimmte Grenztemperatur aufgeheizt wird. In dieser Aufheizphase ist die Strömungsgeschwindigkeit in dem das Gehäuse umgebenden Würzevolumen im Durchschnitt noch sehr gering, so dass die Würze nur schwach umgewälzt wird. Um für eine rasche Erhöhung der Würzeumwälzung zu sorgen, ist es besonders vorteilhaft, wenn die Bypassöffnung während der Aufheizphase zumindest zeitweise und zumindest teilweise geöffnet ist. Durch die aus der Bypassöffnung ausströmende Würze wird die durchschnittliche Strömungsgeschwindigkeit außerhalb des Gehäuses des Innenkochers signifikant erhöht.

Um ein optimales Ausdampfen der Würze erreichen zu können, sollte die Bypassöffnung insbesondere nach Erreichen der Grenztemperatur oder nach Ablauf einer vorbestimmten ersten Prozesszeit geschlossen werden. Durch das Schließen der Bypassöffnung wird erreicht, dass das gesamte im Innenkocher aufgeheizte Würzevolumen durch die Ausströmöffnung austritt und von dort auf den Flüssigkeitsspiegel fällt. Diese Art der Würzekochung, bei dem die Würze auf den Flüssigkeitsspiegel auftrifft, erleichtert das Austreiben von flüchtigen Aromastoffen und das Ausdampfen von verdampfbaren Flüssigkeitsbestandteilen.

Nach einer weiteren Verfahrensvariante wird die Bypassöffnung während des an die Aufheizphase anschließenden Würzekochprozesses zumindest einmal geöffnet, so dass zumindest ein Teil der Würze während des Würzekochprozesses durch die Bypassöffnung ausströmen kann. Dieses Öffnen der Bypassöffnung ist insbesondere dann von Vorteil, wenn die Bypassöffnung zuvor während der Aufheizphase erstmalig geschlossen wurde. Durch das Öffnen der Bypassöffnung während des Würzekochprozesses wird erreicht, dass zumindest ein Teil der kochenden Würze nicht auf den Flüssigkeitsspiegel auftrifft, sondern die nunmehr Dampfblasen enthaltende Würzeströmung aus dem Inneren des Innenkochers direkt in die den Innenkocher umgebende Würze überströmt. Die in der kochenden Würze enthaltenen Dampfblasen treiben dann von unten an die Oberfläche des Würzevolumens, was die Würzeströmung im Kochgefäß positiv beeinflusst und Stoffumsetzungsprozesse in der Würze in erwünschter Weise fördert.

Um den Würzekochprozess gezielt beeinflussen zu können, ist es besonders vorteilhaft, wenn die Einstellung des Öffnungsquerschnitts der Bypassöffnung in Abhängigkeit eines Prozessparameters der Würzekochung erfolgt. Insbesondere kann der Würzekochprozess durch die Einstellung des Öffnungsquerschnitts der Bypassöffnung in Abhängigkeit des jeweiligen Prozessparameters gesteuert oder geregelt werden.

Ein geeigneter Prozessparameter ist beispielsweise die Prozesszeit der Würzekochung, da dieser Prozessparameter sehr einfach erfasst werden kann.

Alternativ bzw. additiv zur Erfassung der Prozesszeit als Prozessparameter ist es auch denkbar, die Schaumbildung auf der Oberfläche der Würze direkt oder indirekt zu messen und die Einstellung des Öffnungsquerschnitts der Bypassöffnungen in Abhängigkeit dieses Schaumbildungsparameters vorzunehmen. Denn durch den Auswurf der Würze an der oberen Ausströmöffnung kann die Schaumbildung auf der Oberfläche der Würze vermindert werden, wohingegen durch das Austreten der Würze durch die Bypassöffnungen unterhalb des Flüssigkeitsspiegels und das damit verbundene Auftreiben der Dampfblasen an den Flüssigkeitsspiegel die Schaumbildung verstärkt wird. Überschreitet die Schaummenge auf der Oberfläche der Würze einen bestimmten Grenzwert, so kann durch Verringerung des Öffnungsquerschnitts der Bypassöffnung ein weiteres Zunehmen der Schaummenge verhindert werden. Zugleich wird die durch die obere Ausströmöffnung ausgeworfene Würzemenge erhöht, was zu einer weiteren Verringerung des Schaums auf der Oberfläche der Würze führt.

Weiterhin ist es gemäß einer bevorzugten Verfahrensvariante besonders vorteilhaft, als Prozessparameter zur Einstellung der Bypassöffnung die der Würze zugeführte Prozesswärme zu beobachten. Insbesondere in Kochpausen, in denen der Würze keine bzw. weniger Prozesswärme zugeführt wird, erweist es sich als vorteilhaft, die Bypassöffnung zu öffnen bzw. deren Öffnungsquerschnitt zu vergrößern. Trotz des geringeren Energieeintrags kann eine ausreichende Würzeumwälzung in den Kochpausen durch das zunehmende Öffnen der Bypassöffnungen gewährleistet werden, da die Würze damit unterhalb des Flüssigkeitsspiegels aus dem Innenkocher ausströmen kann und somit eine Fallhöhe nicht überwunden werden muss.

Nach einer bevorzugten Verfahrensvariante ist der Öffnungsquerschnitt der Bypassöffnung und der Öffnungsquerschnitt der Ausströmöffnung veränderbar. Der Öffnungsquerschnitt der Bypassöffnung wird bei dieser Variante in Abhängigkeit vom Öffnungsquerschnitt der Ausströmöffnung und/oder der Öffnungsquerschnitt der Ausströmöffnung in Abhängigkeit vom Öffnungsquerschnitt der Bypassöffnung verändert.

Soll beispielsweise bei Vergrößerung des Öffnungsquerschnitts der Bypassöffnung der Öffnungsquerschnitt der Ausströmöffnung, insbesondere proportional dazu, verkleinert werden und umgekehrt bei Verkleinerung des Öffnungsquerschnitts der Bypassöffnung der Öffnungsquerschnitt der Ausströmöffnung, insbesondere proportional dazu, vergrößert werden, so kann dazu eine Manschette verwendet werden, die von den Bypassöffnungen bis zur Austrittsöffnung reicht. Der Leitschirm oberhalb der Manschette wird in der Würzepfanne fixiert, so dass bei Anheben der Manschette einerseits die Bypassöffnungen am unteren Rand der Manschette geöffnet werden und zugleich der Ringspalt zwischen oberem Rand der Manschette und Leitschirm verkleinert wird.

Besonders geeignet zur Durchführung des erfindungsgemäßen Würzekochverfahrens ist ein Innenkocher gemäß der Lehre des unabhängigen Vorrichtungsanspruchs. Dieser Innenkocher weist gattungsgemäß eine Einströmöffnung, eine Ausströmöffnung und zumindest eine Bypassöffnung im Gehäuse auf. Anders als bei bekannten Innenkochern ist die Bypassöffnung erfindungsgemäß oberhalb eines Stauabschnitts, beispielsweise eines Staukonus, im Gehäuse angeordnet, so dass die Würze erst nach Verengung der Würzeströmung im Stauabschnitt durch die Bypassöffnungen aus dem Gehäuse austreten kann. Diese Anordnung der Bypassöffnungen hat den Vorteil, dass die Würze aufgrund der Verengung der Würzeströmung im Stauabschnitt mit einer sehr viel höheren Strömungsgeschwindigkeit an der Bypassöffnung ankommt und damit mit einer höheren Strömungsgeschwindigkeit aus dieser Bypassöffnung austreten kann. Dadurch wiederum wird eine bessere Umwälzung der Würze und die Vermeidung von Strömungstoträumen in dem das Gehäuse umgebenden Würzevolumen gewährleistet.

Der Stauabschnitt sollte dabei vorzugsweise in der Art eines Staukonus ausgebildet sein, um eine gleichmäßige Erhöhung der Strömungsgeschwindigkeiten bei der Verengung der Würzeströmung im Stauabschnitt zu gewährleisten.

An welcher Stelle des Innenkochers die Bypassöffnung oberhalb des Stauabschnitts angeordnet ist, ist grundsätzlich beliebig. Nach einer bevorzugten Ausführungsform wird die Bypassöffnung direkt am Übergang zwischen dem oberen Ende des Stauabschnitts und dem unteren Ende des daran anschließenden, insbesondere zylindrisch ausgebildeten Gehäuseabschnitts angeordnet. Durch diese Anordnung an der unteren Grenze zum oberen Ende des Stauabschnitts hin wird gewährleistet, dass auch bei allmählichem Absinken des Flüssigkeitsspiegels in der Würzekochenrichtung durch zunehmende Flüssigkeitsverdampfung eine Bedeckung der Bypassöffnung mit der das Gehäuse umgebenden Würze für lange Zeit gewährleistet ist. Erst bei sehr starker Verdampfung fällt der Flüssigkeitsspiegel unter die Bypassöffnungen, so dass die Würze nicht mehr direkt in die außerhalb des Gehäuses liegende Würze überströmen kann, sondern von der Bypassöffnung auf die Flüssigkeitsoberfläche fällt. Für die Art der konstruktiven Ausbildung der Bypassöffnungen ist eine Vielzahl von Lösungen denkbar. Beispielsweise können im Gehäuse des Innenkochers verstellbare Klappen vorgesehen sein, mit denen der Öffnungsquerschnitt der Bypassöffnungen veränderbar ist. Auch die Verwendung einer verstellbar gelagerten Manschette, die den Innenkocher im Bereich der Bypassöffnungen umfasst, so dass bei Drehung der Manschette der freie Öffnungsquerschnitt blendenartig veränderbar ist, ist denkbar. Nach einer bevorzugten Ausführungsform wird die Bypassöffnung dadurch gebildet, dass der oberhalb des Stauabschnitts angeordnete Gehäuseabschnitt des Innenkochers zumindest teilweise höhenverstellbar gelagert ist. Durch entsprechende Höheneinstellung des verstellbar gelagerten Gehäuseabschnitts kann zwischen diesem Gehäuseabschnitt und dem darunter liegenden Stauabschnitt eine Spaltöffnung gebildet werden. Soweit der obere Gehäuseabschnitt und das Ende des Stauabschnitts rotationssymmetrisch ausgebildet sind, ergibt sich eine Ringspaltöffnung als Bypassöffnung.

Während einiger Prozessphasen ist es vorteilhaft, wenn die Bypassöffnung vollständig geschlossen ist. Um ein weitgehend vollständiges Verschließen der Bypassöffnung gewährleisten zu können, ist es deshalb besonders vorteilhaft, wenn das obere Ende des Stauabschnitts und das untere Ende des daran oberhalb anschließenden Gehäuseabschnitts jeweils konisch ausgebildete Kontaktflächen aufweisen, die beim Schließen der als Bypassöffnung dienenden Spaltöffnung aneinander zur Anlage kommen können. Durch die konische Ausbildung der Kontaktflächen wird eine Vergrößerung der von den Kontaktflächen gebildeten Dichtfläche erreicht, so dass die Würze bei Schließen der Spaltöffnung nur noch in sehr geringem Maße bzw. nicht mehr austreten kann.

Alternativ zu der Verwendung eines Spindelhubantriebs sind auch Pneumatikantriebe oder Hydraulikantriebe zum Antrieb des höhenverstellbaren Gehäuseabschnitts denkbar.

Soll die Schaumbildung auf der Oberfläche der Würze durch Einstellung der Bypassöffnung gezielt beeinflusst werden, so sollte in oder an der Würzekocheinrichtung ein Sensor vorgesehen werden, mit dem die Schaumbildung direkt oder indirekt gemessen werden kann.

In welcher Weise die Höhenverstellung des höhenverstellbaren Gehäuseabschnitts konstruktiv realisiert wird, ist grundsätzlich beliebig. Nach einer ersten bevorzugten Ausführungsform ist dazu ein Spindelhubantrieb vorgesehen, wobei die Antriebsspindel des Spindelhubantriebs dabei vorzugsweise die Wandung der Würzekocheinrichtung durchgreift und von einem außerhalb der Würzekocheinrichtung angeordneten Antriebsmotor angetrieben wird. Damit ergibt sich ein konstruktiv sehr leicht zu realisierender Höhenverstellungsantrieb, der eine zuverlässige Höhenverstellung über lange Betriebsdauern gewährleistet.

Eine Ausführungsform eines erfindungsgemäßen Innenkochers und verschiedene Verfahrensvarianten des erfindungsgemäßen Würzekochverfahrens sind in den Zeichnungen schematisch dargestellt und werden nachfolgend beispielhaft erläutert.

Es zeigen:
- **Fig. 1**: eine Würzekocheinrichtung mit Innenkocher bei geschlossener Bypassöffnung im Querschnitt;
- **Fig. 2**: den oberen Teil des Innenkochers gemäß **Fig. 1** in seitlicher Ansicht;
- **Fig. 3**: die Würzekocheinrichtung gemäß **Fig. 1** bei teilweise geöffneter Bypassöffnung;
- **Fig. 4**: den oberen Teil des Innenkochers gemäß **Fig. 3**;
- **Fig. 5**: die Würzekocheinrichtung gemäß **Fig. 1** bei voll geöffneter Bypassöffnung;
- **Fig. 6**: den oberen Teil des Innenkochers gemäß **Fig. 5** in seitlicher Ansicht.

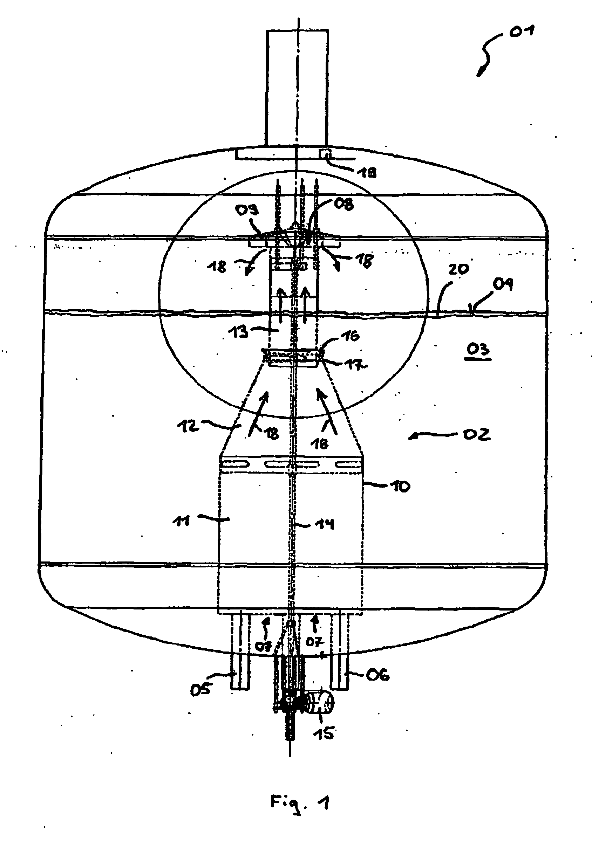

In **Fig. 1** ist eine Würzekocheinrichtung 01 mit einem Innenkocher 02 schematisch im Querschnitt dargestellt. Die Würzekocheinrichtung 01 ist mit Würze 03 befüllt, so dass sich ein Flüssigkeitsspiegel 04 bildet.

Um der Würze 03 im Innenkocher 02 Wärme zuführen zu können, ist im Inneren des Innenkochers 02 ein in **Fig. 1** nicht dargestellter Rohrbündelwärmetauscher vorgesehen. Dem Rohrbündelwärmetauscher wird durch ein Dampfrohr 05 Frischdampf zugeführt. Über ein Dampfrohr 06 wird der im Rohrbündeltauscher abgekühlte Dampf wieder abgeführt.

Der Innenkocher 02 weist eine untere Einströmöffnung 07, durch die die Würze 03 in den Innenkocher 02 einströmt, und eine obere Ausströmöffnung 08, durch die die Würze 03 aus dem Innenkocher 02 wieder ausströmen kann, auf. Oberhalb der Ausströmöffnung 08 ist ein Würzeleitschirm 09 befestigt, mit dem die an der Ausströmöffnung 08 ausströmende Würze 03 nach unten abgelenkt werden kann, um ein gutes Wurfbild beim Auftreffen der Würze auf den Flüssigkeitsspiegel 04 zu gewährleisten. Der Würzeleitschirm 09 ist relativ zur Ausströmöffnung 08 höhenverstellbar gelagert.

Um das außerhalb des Innenkochers 02 befindliche Würzevolumen von der innerhalb des Kochers 02 aufgeheizten Würzeströmung abzutrennen, ist ein Gehäuse 10 vorgesehen, das drei Abschnitte 11, 12 und 13 aufweist. Der erste Abschnitt 11 dient als Heizzone, ist zylindrisch aufgebaut und nimmt in seinem Inneren den Rohrbündelwärmetauscher auf. Der zweite Abschnitt 12 schließt an den ersten Abschnitt 11 an und dient als Stauabschnitt, der als Staukonus ausgebildet ist. An den Stauabschnitt 12 schließt sich ein dritter Gehäuseabschnitt 13 an, der zylindrisch ausgebildet ist und durch den die im Stauabschnitt 12 verengte Würzeströmung zur Austrittsöffnung 09 geleitet wird.

Der dritte Gehäuseabschnitt 13 ist relativ zum Stauabschnitt 12 höhenverstellbar gelagert. Als Stellantrieb zur Höhenverstellung des dritten Gehäuseabschnitts 13 dient ein Spindelhubantrieb mit einer Antriebsspindel 14 und einem Antriebsmotor 15. Zur horizontalen und vertikalen Führung des dritten Gehäuseabschnitts 13 können zusätzliche Führungselemente, beispielsweise Führungsschienen, vorgesehen sein, die in **Fig. 1** nicht dargestellt sind.

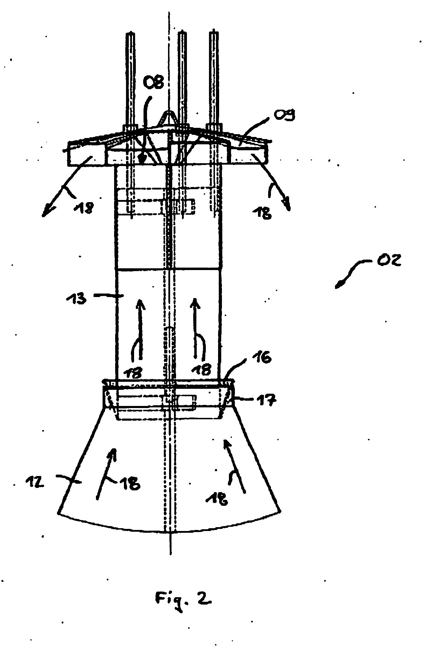

**Fig. 2** zeigt den oberen Teil des Innenkochers 02, wobei sich der dritte Gehäuseabschnitt 13 in seiner tiefsten Höheneinstellung befindet. In dieser tiefsten Höheneinstellung des dritten Gehäuseabschnitts 13 liegt das konisch ausgebildete untere Ende 16 dichtend an dem ebenfalls konisch ausgebildeten oberen Ende 17 abdichtend an. Auf diese Weise kann die durch Strömungspfeile 18 angedeutete Würzeströmung oberhalb des Stauabschnitts 12 nicht aus dem Innenkocher 02 austreten, sondern strömt aus dem Stauabschnitt 12 in den dritten Gehäuseabschnitt 13 und von dort zur Ausströmöffnung 08, wo sie aus dem Innenkocher 02 ausgeworfen wird und mit einem bestimmten Wurfbild auf den Flüssigkeitsspiegel 04 auftrifft. Weiterhin ist in der Würzekocheinrichtung 01 ein Sensor 19 vorgesehen, mit dem die Dicke der Schaumschicht 20 mittelbar gemessen werden kann. Dies kann beispielsweise durch akustische Auswertung der Geräuschkulisse beim Auftreffen der aus dem Innenkocher 02 austretenden Würze auf den Flüssigkeitsspiegel 04 erfolgen.

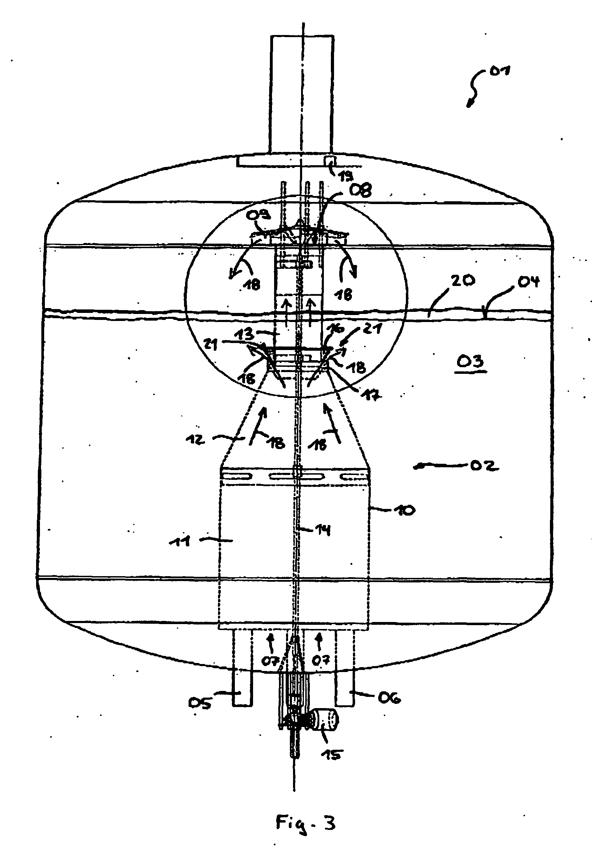

**Fig. 3** zeigt die Würzekocheinrichtung 01, nachdem der dritte Gehäuseabschnitt 13 ein stückweit angehoben worden ist. Durch den zusätzlichen Abstand zwischen dem dritten Gehäuseabschnitt 13 und dem darunter liegenden Stauabschnitt 12 bildet sich eine Bypassöffnung 21, die in der Art eines Ringspalts ausgebildet ist und durch die ein Teil der Würzeströmung 18 unterhalb des Flüssigkeitsspiegels 04 aus dem Innenkocher 02 austreten kann.

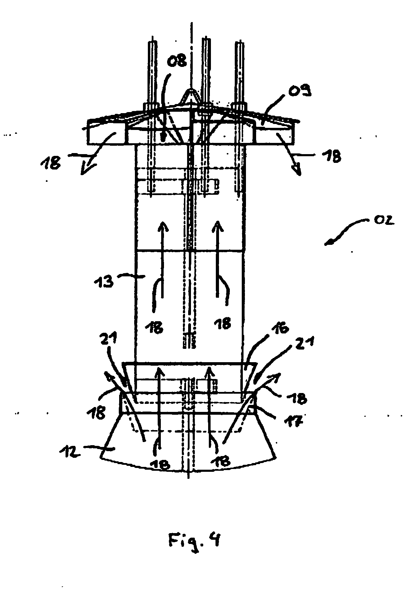

Wie insbesondere aus **Fig. 4** ersichtlich, kann durch das leichte Anheben des dritten Gehäuseabschnitts 13 gewährleistet werden, dass ein Teil der Würze über die Ausströmöffnung 08 und ein anderer Teil durch die Bypassöffnung 21 aus dem Innenkocher 02 ausströmt.

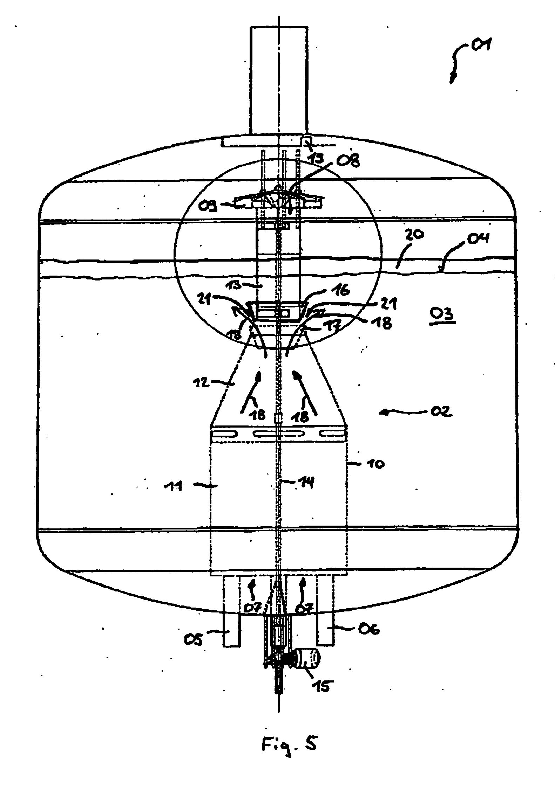

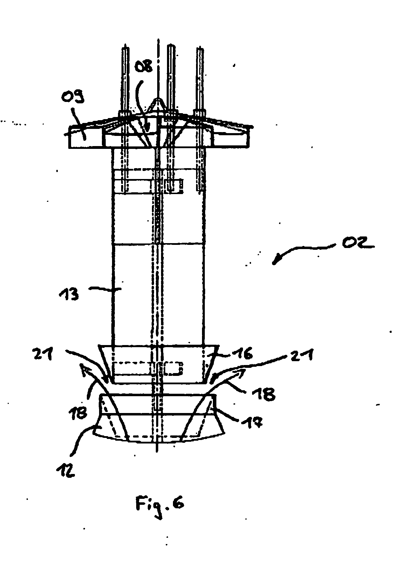

In **Fig. 5** und **Fig. 6** ist die Würzekocheinrichtung 01 bei Anhebung des dritten Gehäuseabschnitts 13 in seiner höchsten Stellung dargestellt. In dieser höchsten Stellung des dritten Gehäuseabschnitts 13 wird die Bypassöffnung 21 zwischen dem Gehäuseabschnitt 13 und dem Stauabschnitt 12 erweitert, so dass durch die Bypassöffnung 21 die gesamte im Innenkocher 02 aufgeheizte Würze austritt. Die bedeutet mit anderen Worten, dass die gesamte Würzeströmung unterhalb des Flüssigkeitsspiegels 04 aus dem Innenkocher 02 austritt und sich keinerlei Wurfbild mehr ergibt.

Bei Betrieb der Würzekocheinrichtung 01 wird der dritte Gehäuseabschnitt 13 zunächst in seine oberste Stellung gefahren (siehe **Fig. 5** und **Fig. 6**) und mit einem Würzevolumen befüllt, so dass die Spaltöffnung 13 vollständig mit Würze überdeckt ist. Während der daran anschließenden Aufheizphase tritt die gesamte aufgeheizte Würze aus der Bypassöffnung 21 aus, wobei aufgrund der Austrittsöffnung unterhalb des Flüssigkeitsspiegels 04 bereits sehr schnell relativ hohe Durchschnittsströmungsgeschwindigkeiten erreicht werden und ein Pulsieren der Würze nicht auftritt.

Sobald eine bestimmte Grenztemperatur überschritten ist, wird der dritte Gehäuseabschnitt 13 vollständig nach unten gefahren, so dass die gesamte Würze durch die Austrittsöffnung 08 aus dem Innenkocher 02 ausströmt und sich ein entsprechendes Wurfbild beim Auftreffen der Würze auf den Flüssigkeitsspiegel 04 ergibt.

Während des dann anschließenden Würzekochprozesses und insbesondere in Kochpausen, in denen der Würze keine weitere Wärmeenergie mehr zugeführt wird, kann der dritte Gehäuseabschnitt 13 wieder leicht angehoben werden (siehe **Fig. 3** und **Fig. 4**) um ein Austreten der Würze durch die Bypassöffnung 21 zu ermöglichen, so dass die Würze trotz des geringeren Wärmeeintrags ausreichend umgewälzt wird.

## Patentansprüche

1. Verfahren zum Betrieb einer Würzekocheinrichtung (01) mit einem Innenkocher (02), insbesondere einem Röhreninnenkocher, wobei der Innenkocher (02) eine untere Einströmöffnung (07), eine obere Ausströmöffnung (08) und ein die Einströmöffnung (07) mit der Ausströmöffnung (08) verbindendes Gehäuse (10) aufweist, und wobei der Würze (03) im Gehäuse (10) mit einer Heizeinrichtung Wärme zugeführt werden kann, und wobei das Gehäuse (10) zwischen Einströmöffnung (07) und Ausströmöffnung (08) zumindest eine Bypassöffnung (21) aufweist, durch die die Würze (03) unter Umgehung der Ausströmöffnung (08) aus dem Gehäuse (10) austreten kann, wobei die Würzekocheinrichtung (01) mit einem Würzevolumen gefüllt wird, so dass die Bypassöffnung (21) unterhalb des von der Würze (03) gebildeten Flüssigkeitsspiegels (04) liegt, wobei zumindest ein Teil der Würze (03) aus dem Inneren des Gehäuses (10) durch die Bypassöffnung (21) direkt in das umgebende Würzevolumen außerhalb des Gehäuses (10) überströmt,
**dadurch gekennzeichnet,**
**dass** die Würzeströmung (18), die durch die Bypassöffnung (21) in das umgebende Würzevolumen überströmt, durch Änderung des Öffnungsquerschnitts der Bypassöffnung (21) beeinflusst wird.

2. Verfahren nach Anspruch 1,
**dadurch gekennzeichnet,**
**dass** die Würzeströmung (18), die durch die Bypassöffnung (21) in das umgebende Würzevolumen überströmt, in Abhängigkeit vom Würzekochprozess verändert wird.

3. Verfahren nach Anspruch 1 oder 2,
**dadurch gekennzeichnet,**
**dass** die Bypassöffnung (21) während der Aufheizphase, in der die Würze (03) von einer Anfangstemperatur auf eine bestimmte Grenztemperatur aufgeheizt wird, zumindest zeitweise zumindest teilweise geöffnet ist.

4. Verfahren nach einem der Ansprüche 1 bis 3,
**dadurch gekennzeichnet,**
**dass** die Bypassöffnung (21), insbesondere nach Erreichen der Grenztemperatur oder nach Ablauf der vorbestimmten ersten Prozesszeit, geschlossen wird.

5. Verfahren nach einem der Ansprüche 1 bis 4,
**dadurch gekennzeichnet,**
**dass** die Bypassöffnung (21) während des an die Aufheizphase anschließenden Würzekochprozesses, insbesondere nach einem erstmaligen Schließen der Bypassöffnung (21) während der Aufheizphase, zumindest einmal geöffnet wird, so dass zumindest ein Teil der Würze (03) während des Würzekochprozesses durch die Bypassöffnung (21) ausströmen kann.

6. Verfahren nach einem der Ansprüche 1 bis 5,
**dadurch gekennzeichnet,**
**dass** die Einstellung des Öffnungsquerschnitts der Bypassöffnung (21) in Abhängigkeit eines Prozessparameters erfolgt.

7. Verfahren nach Anspruch 6,
**dadurch gekennzeichnet,**
**dass** die Einstellung des Öffnungsquerschnitts der Bypassöffnung (21) in Abhängigkeit eines Prozessparameters gesteuert oder geregelt wird.

8. Verfahren nach Anspruch 6 oder 7,
**dadurch gekennzeichnet,**
**dass** als Prozessparameter die Prozesszeit gemessen wird.

9. Verfahren nach einem der Ansprüche 6 bis 8,
**dadurch gekennzeichnet,**
**dass** als Prozessparameter die Schaumschicht (20) auf dem Flüssigkeitsspiegel (04) der Würze (03) direkt oder indirekt gemessen wird.

10. Verfahren nach Anspruch 9,
**dadurch gekennzeichnet,**
**dass** der Öffnungsquerschnitt der Bypassöffnung (21) bei Überschreiten einer bestimmten Schaummenge auf dem Flüssigkeitsspiegel (04) der Würze (03) verringert wird.

11. Verfahren nach einem der Ansprüche 6 bis 10,
**dadurch gekennzeichnet,**
**dass** als Prozessparameter die der Würze (03) zugeführte Prozesswärme direkt oder indirekt gemessen wird.

12. Verfahren nach Anspruch 11,
**dadurch gekennzeichnet,**
**dass** der Öffnungsquerschnitt der Bypassöffnung (21) in Kochpausen, in denen der Würze keine oder weniger Prozesswärme zugeführt wird, vergrößert wird.

13. Verfahren nach einem der Ansprüche 1 bis 12,
**dadurch gekennzeichnet,**
**dass** der Öffnungsquerschnitt der Bypassöffnung und der Öffnungsquerschnitt der Ausströmöffnung veränderbar ist, wobei der Öffnungsquerschnitt der Bypassöffnung in Abhängigkeit vom Öffnungsquerschnitt der Ausströmöffnung und/oder der Öffnungsquerschnitt der Ausströmöffnung in Abhängigkeit vom Öffnungsquerschnitt der Bypassöffnung verändert wird.

14. Verfahren nach Anspruch 13,
**dadurch gekennzeichnet,**
**dass** bei Vergrößerung des Öffnungsquerschnitts der Bypassöffnung der Öffnungsquerschnitt der Ausströmöffnung, insbesondere proportional dazu, verkleinert wird und umgekehrt bei Verkleinerung des Öffnungsquerschnitts der Bypassöffnung der Öffnungsquerschnitt der Ausströmöffnung, insbesondere proportional dazu, vergrößert wird.

15. Innenkocher (02) zur Anordnung in einer Würzekocheinrichtung (01), insbesondere zur Durchführung eines Verfahrens nach einem der Ansprüche 1 bis 14, wobei der Innenkocher (02) eine untere Einströmöffnung (07), eine obere Ausströmöffnung (08) und ein die Einströmöffnung (07) mit der Ausströmöffnung (08) verbindendes Gehäuse (10) aufweist, und wobei im Gehäuse (10) eine Heizeinrichtung vorgesehen ist, mit der der Würze (03) Wärme zugeführt werden kann, und wobei das Gehäuse (10) zwischen Einströmöffnung (07) und Ausströmöffnung (08) zumindest eine verschließbare Bypassöffnung (21) aufweist, durch die die Würze (03) unter Umgehung der Ausströmöffnung (08) aus dem Gehäuse (10) austreten kann,
**dadurch gekennzeichnet,**
**dass** am Gehäuse (10) ein Stauabschnitt (12) vorgesehen ist, durch den der Querschnitt der Würzeströmung (18) nach Passieren der Heizeinrichtung verengt wird, wobei die Bypassöffnung (21) oberhalb des oberen Endes (17) des Stauabschnitts (12) angeordnet ist.

16. Innenkocher nach Anspruch 15,
**dadurch gekennzeichnet,**
**dass** der Stauabschnitt von einem Staukonus (12) gebildet wird.

17. Innenkocher nach Anspruch 15. oder 16,
**dadurch gekennzeichnet,**
**dass** die Bypassöffnung (21) am Übergang zwischen dem oberen Ende (17) des Stauabschnitts (12) und dem unteren Ende (16) des daran anschließenden, insbesondere zylindrisch ausgebildeten, Gehäuseabschnitts (13) angeordnet ist.

18. Innenkocher nach einem der Ansprüche 15 bis 17,
**dadurch gekennzeichnet,**
**dass** der oberhalb des Stauabschnitts (12) angeordnete Gehäuseabschnitt (13) des Innenkochers (02) zumindest teilweise höhenverstellbar gelagert ist, so dass durch Höhenverstellung dieses Gehäuseabschnitts (13) eine als Bypassöffnung (21) dienende Öffnung, insbesondere Ringspaltöffnung, gebildet werden kann.

19. Innenkocher nach Anspruch 18,
**dadurch gekennzeichnet,**
**dass** das obere Ende (17) des Stauabschnitts (12) und das untere Ende (16) des daran oberhalb anschließenden Gehäuseabschnitts (13) jeweils konisch ausgebildete Kontaktflächen aufweisen, die beim Schließen der Bypassöffnung (21) aneinander zur Anlage kommen.

20. Innenkocher nach Anspruch 18 oder 19,
**dadurch gekennzeichnet,**
**dass** zum Antrieb des höhenverstellbaren Gehäuseabschnitts (13) ein Spindelhubantrieb (14, 15) vorgesehen ist.

21. Innenkocher nach Anspruch 20,
**dadurch gekennzeichnet,**
**dass** die Antriebsspindel (14) des Spindelhubantriebs (14, 15) die Wandung der Würzekocheinrichtung (01) durchgreift und von einem außerhalb der Würzekocheinrichtung angeordneten Antriebsmotor (15) angetrieben wird.

22. Innenkocher nach Anspruch 18 oder 19,
**dadurch gekennzeichnet,**
**dass** zum Antrieb des höhenverstellbaren. Gehäuseabschnitts ein Pneumatikantrieb oder Hydraulikantrieb vorgesehen ist.

23. Innenkocher nach einem der Ansprüche 15 bis 22,
**dadurch gekennzeichnet,**
**dass** oberhalb des höhenverstellbaren Gehäuseabschnitts ein Würzeleitschirm angeordnet ist.

24. Innenkocher nach Anspruch 23,
**dadurch gekennzeichnet,**
**dass** der Würzeleitschirm starr montiert ist und die Stellbewegungen des höhenverstellbaren Gehäuseabschnitts nicht auf den Würzeleitschirm übertragen werden.

25. Innenkocher nach einem der Ansprüche 15 bis 24,
**dadurch gekennzeichnet,**
**dass** in oder an der Würzekocheinrichtung ein Sensor (19) vorgesehen ist, mit dem die Schaumschicht (20) auf dem Flüssigkeitsspiegel (04) der Würze (03) direkt oder indirekt gemessen werden kann.

## Claims

1. Method for operating a wort boiling device (01) with an internal boiler (02), in particular an internal tubular boiler, wherein the internal boiler (02) has a lower inlet opening (07), an upper outlet opening (08) and a housing (10) that couples the inlet opening (07) with the outlet opening (08), and wherein the wort (03) can be supplied with heat in the housing (10) by means of a heating device, and wherein the housing (10) exhibits at least one bypass opening (21) interposed between the inlet opening (07) and the outlet opening (08), by means of which the wort (03) is capable of escaping out of the housing (10) by bypassing the outlet opening (08), wherein the wort boiling device (01) is filled with a wort volume, in such a manner that the bypass opening (21) is disposed below the liquid surface (04) formed by the wort (03), wherein at least one portion of the wort (03) flows from the interior of the housing (10) through the bypass opening (21) directly into the surrounding wort volume at the outside of the housing (10),
**characterized in that**
the wort flow (18) that flows through the bypass opening (21) into the surrounding wort volume is affected by variations in the opening cross-section of the bypass opening (21).

2. Method according to claim 1,
**characterized in that**
the wort flow (18) that flows through the bypass opening (21) into the surrounding wort volume is varied as a function of the wort boiling process.

3. Method according to claim 1 or 2,
**characterized in that**
the bypass opening (21) is opened at least temporarily at least partially during the heating phase, in which the wort (03) is heated from an initial temperature to a specific threshold temperature.

4. Method according to any of claims 1 to 3,
**characterized in that**
the bypass opening (21) is closed, in particular when the threshold temperature is reached or after the preset first process time has elapsed.

5. Method according to any of claims 1 to 4,
**characterized in that**
the bypass opening (21) is opened at least one time during the wort boiling process following the heating phase, in particular subsequent to a first closing action of the bypass opening (21) during the heating phase, so that at least a portion of the wort (03) is capable of flowing through the bypass opening (21) during the wort boiling process.

6. Method according to any of claims 1 to 5,
**characterized in that**
the adjustment of the opening cross-section of the bypass opening (21) is performed as a function of a process parameter.

7. Method according to claim 6,
**characterized in that**
the adjustment of the opening cross-section of the bypass opening (21) is controlled or adapted as a function of a process parameter.

8. Method according to claim 6 or 7,
**characterized in that**
the process time is measured as a process parameter.

9. Method according to any of claims 6 to 8,
**characterized in that**
the froth layer (20) on top of the liquid surface (04) of the wort (03) is directly or indirectly measured as a process parameter.

10. Method according to claim 9,
**characterized in that**
the opening cross-section of the bypass opening (21) is reduced when a certain amount of froth on top of the liquid surface (04) of the wort (03) is exceeded.

11. Method according to any of claims 6 to 10,
**characterized in that**
the process heat supplied to the wort (03) is directly or indirectly measured as a process parameter.

12. Method according to claim 11,
**characterized in that**
the opening cross-section of the bypass opening (21) is enlarged in boiling breaks in which the wort is not supplied with process heat at all or with a reduced amount thereof.

13. Method according to any of claims 1 to 12,
**characterized in that**
the opening cross-section of the bypass opening and the opening cross-section of the outlet opening are variable, wherein the opening cross-section of the bypass opening is varied as a function of the opening cross-section of the outlet opening and/or the opening cross-section of the outlet opening is varied as a function of the opening cross-section of the bypass opening.

14. Method according to claim 13,
**characterized in that**
when the opening cross-section of the bypass opening is enlarged, the opening cross-section of the outlet opening is reduced, in particular proportionally thereto, and conversely, when the opening cross-section of the bypass opening is reduced, the opening cross-section of the outlet opening is enlarged, in particular proportionally thereto.

15. Internal boiler (02) for arrangement in a wort boiling device (01), in particular for performing a method according to any of claims 1 to 14, wherein the internal boiler (02) has a lower inlet opening (07), an upper outlet opening (08) and a housing (10) that couples the inlet opening (07) with the outlet opening (08), and wherein a heating device is provided within the housing (10), by means of which heat can be supplied to the wort (03), and wherein the housing (10) exhibits at least one closable bypass opening (21) interposed between the inlet opening (07) and the outlet opening (08), by means of which the wort (03) is capable of escaping out of the housing (10) by bypassing the outlet opening (08),
**characterized in that**
an accumulation portion (12) is provided at the housing (10) by means of which the cross-section of the wort flow (18) is narrowed subsequent to passing the heating device, wherein the bypass opening (21) is disposed above the upper end (17) of the accumulation portion (12).

16. Internal boiler according to claim 15,
**characterized in that**
the accumulation portion is formed by an accumulation cone (12).

17. Internal boiler according to claim 15 or 16,
**characterized in that**
the bypass opening (21) is disposed in the transitional area between the upper end (17) of the accumulation portion (12) and the lower end (16) of the housing section (13) adjacent thereto that is formed in particular cylindrically.

18. Internal boiler according to any of claims 15 to 17,
**characterized in that**
the housing section (13) disposed above the accumulation portion (12) of the internal boiler (02) is mounted so as to be at least partially adjustable in height, so that by means of adjusting the height of said housing section (13) an opening serving as a bypass opening (21), in particular an annular gap orifice, can be formed.

19. Internal boiler according to claim 18,
**characterized in that**
the upper end (17) of the accumulation portion (12) and the lower end (16) of the housing section (13) adjacent thereto on the upper surface respectively exhibit conically shaped contact surfaces that are brought into abutment with one another when the bypass opening (21) is closed.

20. Internal boiler according to claim 18 or 19,
**characterized in that**
a spindle lifting drive (14, 15) is provided for driving the height-adjustable housing section (13).

21. Internal boiler according to claim 20,
**characterized in that**
the driving spindle (14) of the spindle lifting drive (14, 15) penetrates through the wall of the wort boiling device (01) and is driven by a driving motor (15) that is disposed on the outside of the wort boiling device.

22. Internal boiler according to claim 18 or 19,
**characterized in that**
a pneumatic drive or a hydraulic drive is provided for driving the height-adjustable housing section.

23. Internal boiler according to any of claims 15 to 22,
**characterized in that**
a wort guiding screen is disposed above the height-adjustable housing section.

24. Internal boiler according to claim 23,
**characterized in that**
the wort guiding screen is rigidly mounted and the adjusting movements of the height-adjustable housing section are not transmitted to the wort guiding screen.

25. Internal boiler according to any of claims 15 to 24,
**characterized in that**
a sensor (19) is provided in or at the wort boiling device, by means of which the froth layer (20) on top of the liquid surface (04) of the wort (03) can be directly or indirectly measured.

## Revendications

1. Procédé destiné au fonctionnement d'un dispositif de cuisson de moût (01) avec un cuiseur intérieur (02), en particulier un cuiseur intérieur à tubes, dans lequel le cuiseur intérieur (02) présente une ouverture d'entrée inférieure (07), une ouverture de sortie supérieure (08) et un boîtier (10) reliant l'ouverture d'entrée (07) avec l'ouverture de sortie (08), et dans lequel le moût (03) peut être alimenté en chaleur dans le boîtier (10) au moyen d'un dispositif de chauffage, et dans lequel le boîtier (10) présente au moins une ouverture de contournement (07) interposée entre l'ouverture d'entrée (07) et l'ouverture de sortie (08) permettant au moût (03) de s'échapper vers l'extérieur du boîtier (10) en contournant l'ouverture de sortie (08), le dispositif de cuisson de moût (01) étant rempli avec un volume de moût, de telle sorte que l'ouverture de contournement (21) est disposée au-dessous de la surface liquide (04) formée par le moût (03), et au moins une partie du moût (03) coulant de l'intérieur du boîtier (10) à travers l'ouverture de contournement (21) directement dans le volume de moût entourant à l'extérieur du boîtier (10),
**caractérisé en ce que**
la coulée de moût (18) coulant à travers l'ouverture de contournement (21) dans le volume de moût entourant est influencée par des variations dans la section transversale d'ouverture de l'ouverture de contournement (21).

2. Procédé selon la revendication 1,
**caractérisé en ce que**
la coulée de moût (18) coulant à travers l'ouverture de contournement (21) dans le volume de moût entourant est variée en fonction du processus de cuisson de moût.

3. Procédé selon la revendication 1 ou 2,
**caractérisé en ce que**
l'ouverture de contournement (21) est ouverte au moins temporairement au moins partiellement pendant la phase de réchauffement, dans laquelle le moût (03) est réchauffé d'une température initiale à une température limite spécifique.

4. Procédé selon l'une quelconque des revendications 1 à 3,
**caractérisé en ce que**
l'ouverture de contournement (21) est fermée, en particulier après avoir atteint la température limite ou après écoulement du premier temps de processus prédéterminé.

5. Procédé selon l'une quelconque des revendications 1 à 4,
**caractérisé en ce que**
l'ouverture de contournement (21) est ouverte au moins une fois pendant le processus de cuisson de moût suite à la phase de réchauffement, particulièrement suite à une première fermeture de l'ouverture de contournement (21) pendant la phase de réchauffement, de telle sorte qu'au moins une partie du moût (03) est capable de couler à travers l'ouverture de contournement (21) pendant le processus de cuisson de moût.

6. Procédé selon l'une quelconque des revendications 1 à 5,
**caractérisé en ce que**
le réglage de la section transversale d'ouverture de l'ouverture de contournement (21) est exécuté en fonction d'un paramètre de processus.

7. Procédé selon la revendication 6,
**caractérisé en que**
le réglage de la section transversale d'ouverture de l'ouverture de contournement (21) est contrôlé ou adapté en fonction d'un paramètre de processus.

8. Procédé selon la revendication 6 ou 7,
**caractérisé en ce que**
le temps de processus est mesuré en tant que paramètre de processus.

9. Procédé selon l'une quelconque des revendications 6 à 8,
**caractérisé en ce que**
la couche d'écume (20) au-dessus de la surface liquide (04) du moût (03) est directement ou indirectement mesurée en tant que paramètre de processus.

10. Procédé selon la revendication 9,
**caractérisé en ce que**
la section transversale d'ouverture de l'ouverture de contournement (21) est réduite quand une certaine quantité d'écume au-dessus de la surface liquide (04) du moût (03) est dépassée.

11. Procédé selon l'une quelconque des revendications 6 à 10,
**caractérisé en ce que**
la chaleur de processus alimentée dans le moût (03) est directement ou indirectement mesurée en tant que paramètre de processus.

12. Procédé selon la revendication 11,
**caractérisé en ce que**
la section transversale d'ouverture de l'ouverture de contournement (21) est agrandie pendant des pauses de cuisson, pendant lesquelles le moût n'est pas alimenté en chaleur de processus du tout ou en une quantité réduite de celle-ci.

13. Procédé selon l'une quelconque des revendications 1 à 12,
**caractérisé en ce que**
la section transversale d'ouverture de l'ouverture de contournement et la section transversale d'ouverture de l'ouverture de sortie sont variables, la section transversale d'ouverture de l'ouverture de contournement étant variée en fonction de la section transversale d'ouverture de l'ouverture de sortie et/ou la section transversale d'ouverture de l'ouverture de sortie étant variée en fonction de la section transversale d'ouverture de l'ouverture de contournement.

14. Procédé selon la revendication 13,
**caractérisé en ce que**,
quand la section transversale d'ouverture de l'ouverture de contournement (21) est agrandie, la section transversale d'ouverture de l'ouverture de sortie est réduite, en particulier proportionnellement à celle-ci, et inversement, quand la section transversale d'ouverture de l'ouverture de contournement est réduite, la section transversale d'ouverture de l'ouverture de sortie est agrandie, en particulier proportionnellement à celle-ci.

15. Cuiseur intérieur (02) pour l'arrangement dans un dispositif de cuisson de moût (01), en particulier pour réaliser un procédé selon l'une quelconque des revendications 1 à 14, dans lequel le cuiseur intérieur (02) présente une ouverture d'entrée inférieure (07), une ouverture de sortie supérieure (08) et un boîtier (10) reliant l'ouverture d'entrée (07) avec l'ouverture de sortie (08), et dans lequel un dispositif de chauffage est prévu dans le boîtier (10), au moyen duquel le moût (03) peut être alimenté en chaleur, et dans lequel le boîtier (10) présente au moins une ouverture de contournement (21) fermable interposée entre l'ouverture d'entrée (07) et l'ouverture de sortie (08), permettant au moût (03) de s'échapper vers l'extérieur du boîtier (10) en contournant l'ouverture de sortie (08),
**caractérisé en ce qu'**
une partie d'accumulation (12) est prévue au boîtier (10), au moyen de laquelle la section transversale de la coulée de moût (18) est réduite suite au passage à travers le dispositif de chauffage, l'ouverture de contournement (21) étant disposée au-dessus de l'extrémité supérieure (17) de la partie d'accumulation (12).

16. Cuiseur intérieur selon la revendication 15,
**caractérisé en ce que**
la partie d'accumulation est formée par un cône d'accumulation (12).

17. Cuiseur intérieur selon la revendication 15 ou 16,
**caractérisé en ce que**
l'ouverture de contournement (21) est disposée dans la région de transition entre l'extrémité supérieure (17) de la partie d'accumulation (12) et l'extrémité inférieure (16) de la section de boîtier (13) voisine à celle-ci étant façonnée en particulier en forme de cylindre.

18. Cuiseur intérieur selon l'une quelconque des revendications 15 à 17,
**caractérisé en ce que**
la section de boîtier (13) du cuiseur intérieur (02) disposée au-dessus de la partie d'accumulation (12) est aménagée de telle manière que celle-ci est au moins partiellement réglable en hauteur, de telle sorte qu'une ouverture servant comme ouverture de contournement (21), en particulier un orifice annulaire, peut être formée au moyen du réglage de la hauteur de ladite section de boîtier (13).

19. Cuiseur intérieur selon la revendication 18,
**caractérisé en ce que**
l'extrémité supérieure (17) de la partie d'accumulation (12) et l'extrémité inférieure (16) de la section de boîtier (13) voisine à celle-ci au dessus-de la surface supérieure respectivement présentent des surfaces de contact façonnées en forme de cône et qui sont amenées mutuellement en butée quand l'ouverture de contournement (21) est fermée.

20. Cuiseur intérieur selon la revendication 18 ou 19,
**caractérisé en ce qu'**
un entraînement à broche de levage (14, 15) est prévu pour l'actionnement de la section de boîtier (13) réglable en hauteur.

21. Cuiseur intérieur selon la revendication 20,
**caractérisé en ce que**
la broche d'entraînement (14) dudit entraînement à broche de levage (14, 15) pénètre à travers la paroi du dispositif de cuisson de moût (01) et est actionnée par un moteur d'entraînement (15) disposé à l'extérieur du dispositif de cuisson de moût.

22. Cuiseur intérieur selon la revendication 18 ou 19,
**caractérisé en ce qu'**
un entraînement pneumatique ou un entraînement hydraulique est prévu pour l'actionnement de la section de boîtier réglable en hauteur.

23. Cuiseur intérieur selon l'une quelconque des revendications 15 à 22,
**caractérisé en ce qu'**
un écran de guidage de moût est disposé au-dessus de la section de boîtier réglable en hauteur.

24. Cuiseur intérieur selon la revendication 23,
**caractérisé en ce que**
l'écran de guidage de moût est monté rigidement et les mouvements de réglage de la section de boîtier réglable en hauteur ne sont pas transmis à l'écran de guidage de moût.

25. Cuiseur intérieur selon l'une quelconque des revendications 15 à 24,
**caractérisé en ce qu'**
un capteur est prévu dans le ou au dispositif de cuisson de moût, au moyen duquel la couche d'écume (20) au-dessus de la surface liquide (04) peut être directement ou indirectement mesurée.
